# FASCICULE DE BREVET EUROPEEN

(11) **EP 0 808 278 B1**
(45) Date de publication et mention de la délivrance du brevet: **23.09.1998**
(21) Numéro de dépôt: 96903057.6
(22) Date de dépôt: 06.02.1996
(51) Int. Cl.: B65D 1/02

(54) **PROCEDE POUR LA FABRICATION DE RECIPIENTS, TELS QUE BOUTEILLES, A FOND AUTOSTABLE**
VERFAHREN ZUR HERSTELLUNG VON BEHÄLTERN ,WIE FLASCHEN, MIT SELBSTTRAGENDEM BODEN
METHOD FOR MAKING CONTAINERS SUCH AS BOTTLES HAVING A SELF-STABILISING BASE

(30) Priorité: 09.02.1995 FR 9501507
(43) Date de publication de la demande: 26.11.1997
(73) Titulaire: SIDEL, F- 76053 Le Havre Cedex (FR)
(72) Inventeur: DESOUTTER, Luc, F-76600 Le Havre (FR); FEUILLOLEY, Guy, F-76600 Le Havre (FR); OUTREMAN, Jean-Tristan, F-76930 Octeville-sur-Mer (FR); LA BARRE, Paul, F-76310 Sainte-Adresse (FR)
(74) Mandataire: Gorrée, Jean-Michel
(86) Numéro de dépôt international: FR9600194
(87) Numéro de publication internationale: WO9624525

(56) Documents cités:
- EP-A- 0 559 103
- WO-A-90/06263
- FR-A- 2 429 157
- FR-A- 2 508 004
- FR-A- 2 595 294
- US-A- 4 892 205
- US-A- 5 047 271

## Description

La présente invention concerne des perfectionnements apportés aux récipients tels que bouteille, flacon ou analogue, constitués en un matériau thermoplastique à orientation biaxiale et aptes à subir, sans déformations notables, des conditions d'utilisation relativement sévères, lesdits récipients présentant un fond qui est incurvé avec une convexité tournée vers l'intérieur ("fond champagne")et qui possède une épaisseur sensiblement supérieure à celle de la paroi latérale des récipients, et elle concerne plus particulièrement des perfectionnements apportés aux procédés de fabrication de tels récipients.

Les récipients plus particulièrement visés par l'invention sont ceux destinés à rencontrer et à subir sans déformation notable, en cours d'utilisation, des conditions relativement sévères, telles que par exemple le remplissage avec un liquide chaud et/ou la pasteurisation du liquide renfermé dans le récipient, le remplissage avec un liquide sous pression (par exemple boissons carbonatées), le nettoyage avec des liquides et/ou des agents de nettoyage dans le cas de récipients réutilisables.

Un récipient du genre précité est décrit dans le document FR-A-2 595 294.

Dans un premier temps, on a su fabriquer des récipients de ce genre qui présentaient un fond bombé vers l'extérieur, soit hémisphérique, soit de forme complexe. Cette forme du fond entraînait toutefois l'inconvénient de nécessiter l'ajout d'une coupelle permettant au récipient de reposer de façon stable sur un support. Cette opération d'ajout était délicate car elle nécessitait des étapes supplémentaires de mise en place de colle et de centrage de la coupelle par rapport au fond du récipient. En outre, on se trouvait alors en présence de deux éléments en des matériaux différents et il en résultait des difficultés pour le recyclage des matériaux constitutifs des récipients mis au rebut. Un autre inconvénient de ces récipients munis d'une coupelle rapportée était de ne pas résister aux opérations de nettoyage effectuées sur les récipients réutilisables : la liaison du culot au fond de récipient (par collage) se détériorait au contact des produits de nettoyage (soude par exemple) et en outre, cette liaison n'étant pas étanche, du liquide de nettoyage ou de rinçage pénétrait dans le culot et ne pouvait pas en être extrait facilement.

Pour palier ces inconvénients, on a tenté de réaliser des fonds bombés à l'inverse des précédents, avec la convexité tournée vers l'intérieur (dits "fonds champagne"). La réalisation du fond champagne avec une zone centrale à convexité inversée (tournée vers l'extérieur) à titre de renfort mécanique et avec une épaisseur sensiblement plus importante (d'au moins quatre fois) que celle de la paroi latérale du corps, en fonction des contraintes que doit subir le récipient lors de son utilisation, n'a toutefois pas empêché un manque de stabilité de ce fond qui se craquelle sous l'action des agents chimiques utilisés au cours des opérations de nettoyage et qui perd sa forme (retombe) sous l'action de la température notamment.

L'invention a essentiellement pour but de remédier aux inconvénients précités et de proposer un procédé original pour la fabrication de récipients à fond autostable qui conduise à un récipient de forme stable quels que soient les traitements qu'il rencontre au cours de son utilisation, l'invention trouvant en outre une application particulièrement intéressante, bien que non exclusive, pour des récipients réutilisables et lavables à haute température.

A ces fins, il est proposé un procédé pour fabriquer un récipient tel que mentionné au préambule, procédé qui comprend essentiellement les étapes qui suivent :
a) on chauffe, à une température au moins égale à la température de ramollissement du matériau thermoplastique, au moins le corps amorphe d'une préforme;
b) on moule le corps chaud de la préforme pour constituer le corps d'un récipient intermédiaire
   . dont la hauteur est supérieure de 15 % à 30 % à la hauteur du récipient définitif et dont la dimension transversale du corps est d'environ 0 à 30 % supérieure à la dimension transversale du corps du récipient définitif à obtenir, tandis que les parois correspondantes de conformation du moule sont maintenues à une température comprise entre environ 10 et 180°C, de préférence d'environ 60°C,
      et
   . dont le fond est bombé vers l'intérieur et présente une zone centrale dépourvue de convexité tournée vers l'extérieur, ledit fond ayant sensiblement la forme du fond du récipient définitif à obtenir et ayant un diamètre égal ou légèrement supérieur à celui du fond du récipient définitif à obtenir, tandis que les parois correspondantes de conformation du moule sont refroidies à une température sensiblement inférieure aux parois de conformation de la partie intermédiaire et comprise entre environ 2 et 20°C, de préférence d'environ 10 °C, le taux d'allongement du matériau thermoplastique destiné à constituer l'ensemble du fond étant inférieur ou au plus égal à 1,8 et correspondant à un développement du matériau sans étirage sensible de celui-ci ou avec un étirage limité ;
c) on chauffe ensuite au moins le corps du récipient intermédiaire, la paroi latérale du corps étant chauffée à une température comprise entre environ 160 et 230°C et le fond étant chauffé à une température d'environ 60 à 120°C,
   ensuite de quoi on obtient une ébauche à corps rétréci dont le fond présente approximativement la forme et les dimensions du fond du récipient définitif à obtenir ;
d) puis finalement on moule une nouvelle fois le corps de l'ébauche rétrécie par soufflage de la paroi latérale du corps mais sans étirage sensible du fond.

La présence de la zone centrale dépourvue de convexité tournée vers l'extérieur constitue une sorte de clé de voûte au centre du fond champagne et confère à celui-ci une stabilité particulièrement améliorée qui l'empêche de perdre ses caractéristiques initiales.

Dans un mode de réalisation pratique, partant d'une préforme connue actuellement dont le fond comporte le point d'injection, ladite zone centrale inclut le point d'injection qui est légèrement bombé vers l'extérieur de sorte que la notion d'absence de convexité tournée vers l'extérieur s'applique alors à l'ensemble de la zone centrale à l'exclusion du point d'injection.

Dans un mode de réalisation pratique, la forme et les dimensions du fond du moule de soufflage final sont sensiblement équivalentes à la forme et aux dimensions du fond de l'ébauche rétrécie.

Dans une variante, une compensation de pression est prévue dans le moule sous le fond de l'ébauche pour compenser la pression de soufflage, de manière à obtenir le récipient définitif.

Dans un mode de réalisation possible, la zone centrale présente la forme approximative d'un plateau déporté axialement vers l'intérieur, ou bien elle est bombée en forme de dôme à convexité tournée vers l'intérieur.

Avantageusement, ladite zone centrale est en saillie vers l'intérieur du récipient d'au moins 1 mm par rapport à la région environnante du fond, et avantageusement encore elle possède une épaisseur sensiblement égale à celle du reste du fond.

Dans un mode de réalisation pratique, la zone centrale est approximativement ronde ; on peut prévoir que la dimension transversale de la zone centrale représente environ 10 à 40 %, de préférence environ 30 %, de la dimension transversale du fond ; et de façon souhaitable, l'épaisseur accrue du fond est égale à approximativement trois à huit fois l'épaisseur de la paroi latérale mince.

Dans un autre mode de réalisation possible, l'ensemble du fond présente une courbure continue et constitue une voûte continue, sans ligne anguleuse et sans courbure inversée (à l'exception de l'éventuel point d'injection mentionné plus haut).

Une zone centrale ainsi agencée retient la partie centrale du fond champagne et empêche son affaissement sous l'effet de la température et/ou de la pression.

Pour rigidifier au mieux la partie inférieure du fond champagne et la couronne annulaire par laquelle le récipient est amené à reposer sur un support, on peut en outre avantageusement prévoir que la partie inférieure de la paroi latérale adjacente au fond présente, elle aussi, une épaisseur supérieure à celle du reste de la paroi latérale, la hauteur de ladite partie inférieure plus épaisse n'excédant pas approximativement la hauteur du fond champagne, et cette partie inférieure de paroi latérale plus épaisse possède de préférence une épaisseur variable diminuant de façon continue et régulière du bas où elle est sensiblement égale à l'épaisseur du fond vers le haut où elle devient sensiblement égale à l'épaisseur nominale de la paroi latérale.

L'invention sera mieux comprise à la lecture de la description détaillée qui suit de certains modes de réalisation donnés à titre d'exemples non limitatifs. Dans cette description, on se réfère aux dessins annexés sur lesquels:
- les figures 1 à 4 représentent en coupe, de façon très schématique, respectivement quatre variantes de réalisation de la partie inférieure d'un récipient obtenu conformément à l'invention ;
- les figures 5A à 5E représentent schématiquement la préforme, les récipients intermédiaires et le récipient final rencontrés au cours du déroulement d'un procédé préféré de fabrication d'un récipient conforme à l'invention ; et
- les figures 6A à 6C représentent schématiquement la préforme et le récipient final dans le déroulement d'un autre procédé de fabrication d'un récipient conforme à l'invention.

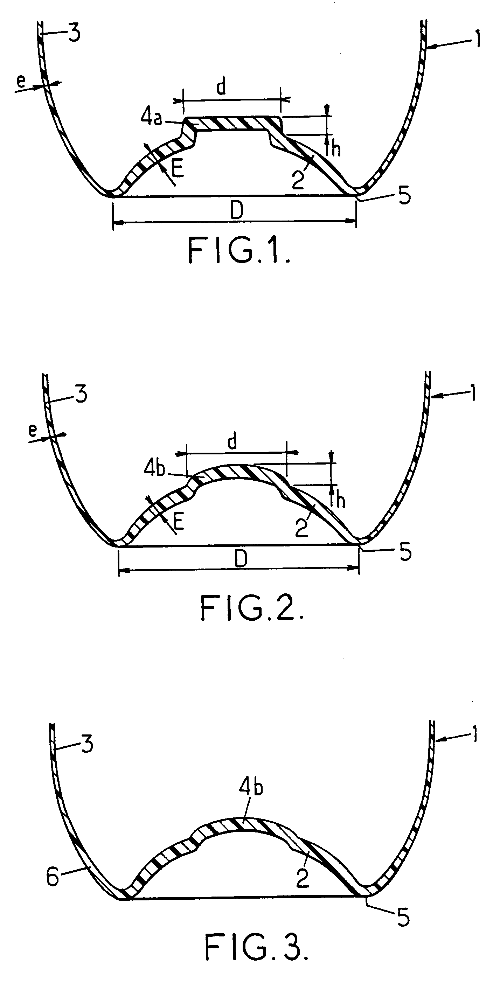

En se référant tout d'abord aux figures 1 à 4, un récipient, tel que bouteille, flacon ou analogue, conforme à l'invention est constitué en un matériau thermoplastique, généralement, mais non exclusivement, du polyéthylènethérephtalate (PET), du polyéthylènenaphtalate (PEN), des copolyesters, des alliages ou mélanges PET-PEN, à orientation biaxiale, récipient qui est réalisé de manière à pouvoir subir, sans déformations notables, des conditions d'utilisation relativement sévères, par exemple soit d'un point de vue thermique (par exemple remplissage du récipient par un liquide chaud, pasteurisation du contenu après remplissage, lavage à haute température), soit d'un point de vue chimique (par exemple agressivité de produits avec lesquels il est mis en contact, cas notamment des récipients réutilisables nettoyés avec une solution à base de soude), soit d'un point de vue mécanique. Plus spécialement, comme représenté aux figures 1-4, on s'intéresse à un récipient 1 qui possède un fond incurvé 2 à convexité tournée vers l'intérieur ( dit "fond champagne"), lequel fond possède une épaisseur sensiblement supérieure à celle de la paroi latérale 3 définissant le corps du récipient (dite aussi plus loin partie intermédiaire du récipient).

Le fond 2 présente une zone centrale 4 qui est dépourvue de convexité tournée vers l'extérieur et qui, à ce titre, est sensiblement plane à l'exclusion du point d'injection lorsqu'il existe (et qui n'est pas représenté sur les dessins ). Cette zone centrale peut présenter la forme approximative d'un plateau 4a (fig. 1) déporté axialement vers l'intérieur, ou bien être incurvée et bombée en forme de dôme 4b (fig. 2) à convexité tournée vers l'intérieur.

La zone centrale 4 est alors en saillie d'au moins 1 mm (saillie désignée par h sur les fig. 1 et 2) vers l'intérieur du récipient par rapport à la région environnante du fond. Dans un exemple typique la saillie est d'environ 5 mm. L'épaisseur de cette zone centrale 4 est sensiblement constante et sensiblement égale à celle du reste du fond. Cette épaisseur E est approximativement trois à huit fois celle e de la paroi latérale mince du récipient.

Pour le reste, la zone centrale 4 peut présenter toute configuration souhaitée ; toutefois, eu égard au déroulement du processus de fabrication dont question plus loin, un contour approximativement rond semble devoir correspondre à la fabrication la plus simple. Sa dimension transversale d (son diamètre pour une forme ronde) représente environ 10 à 40 %, de préférence 35 %, de la dimension transversale D du fond.

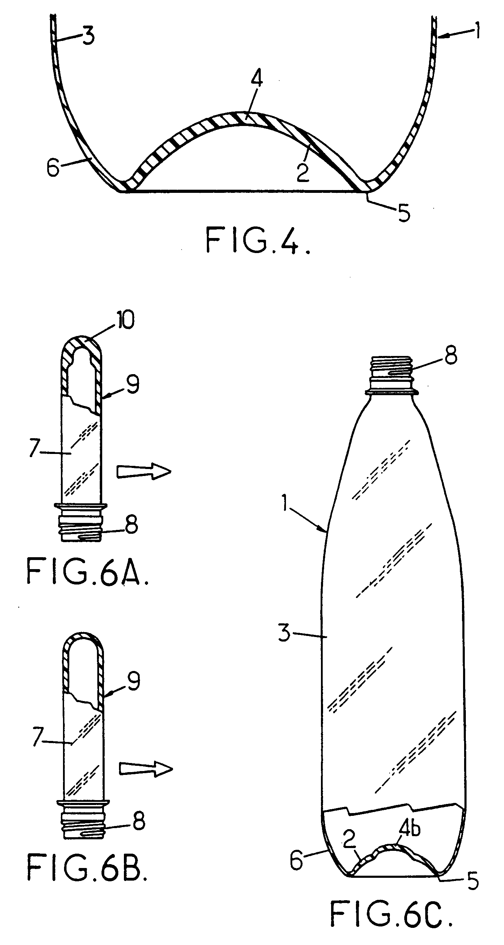

Dans un mode de réalisation de forme plus simple, l'ensemble du fond présente une courbure continue et constitue une voûte continue intégrant la zone centrale 4, sans ligne anguleuse et sans zone à courbure inversée (à l'exception de l'éventuel point d'injection précité) comme représenté à la figure 4.

La structure du fond champagne qui vient d'être décrite confère une bonne stabilité du fond, en particulier de la partie centrale de celui-ci, aussi bien dans toutes les conditions sévères d'utilisation que le récipient est susceptible de rencontrer, y compris lorsqu'il s'agit d'un récipient réutilisable, que dans le temps. Pour accroître encore la stabilité du fond, notamment dans sa région périphérique de raccordement avec la paroi latérale de manière à obtenir un contour d'appui 5 qui s'étende sensiblement dans un plan et obtenir une bonne stabilité du récipient reposant sur un support, il est souhaitable que la partie inférieure 6 de la paroi latérale 3 adjacente au fond présente, elle aussi, une épaisseur supérieure à celle du reste de la paroi latérale et qui peut par exemple décroître progressivement du bas (où elle est sensiblement égale à celle du fond) vers le haut où elle rattrape la valeur nominale d'épaisseur de la paroi latérale ; la hauteur de cette partie plus épaisse 6 n'excède pas approximativement deux fois la hauteur du fond champagne équipé de sa zone centrale saillante 4. Une telle configuration est représentée à la figure 3 dans l'exemple de réalisation d'une zone centrale en forme de dôme 4b, ainsi que dans l'exemple de la figure 4.

Pour fabriquer un récipient tel que précité, on peut avoir recours au procédé qui suit.

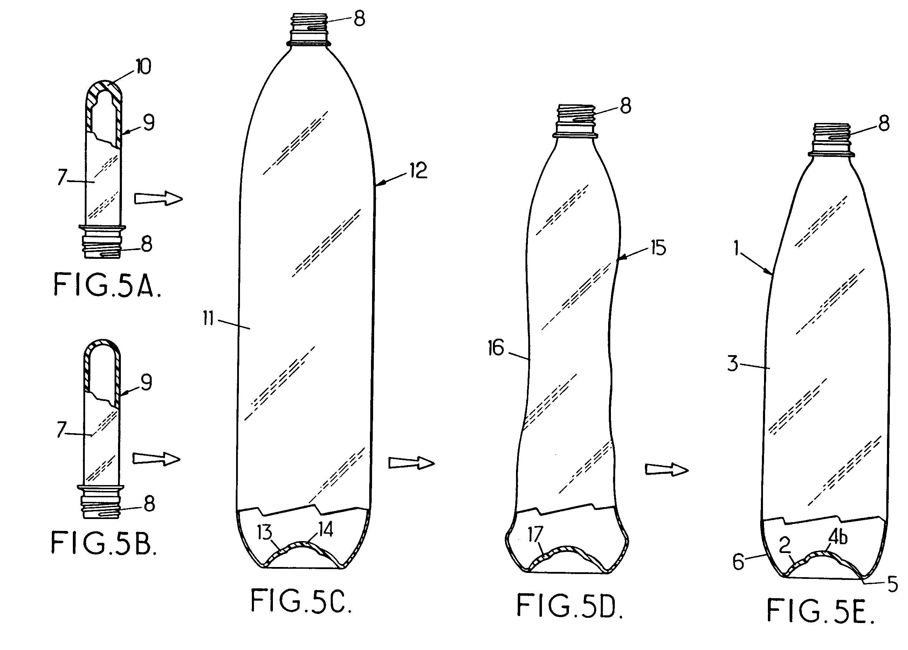

Tout d'abord on chauffe, à une température au moins égale à la température de ramollissement du matériau thermoplastique, au moins le corps amorphe 7 d'une préforme 9 (fig. 5A et 5B). La préforme 9 peut présenter, comme montré à la fig. 5A, une épaisseur plus importante au moins dans sa partie inférieure 10 (qui inclut le fond et une zone avoisinante) destinée à constituer, en fin de processus de fabrication, le fond plus épais du récipient. En variante, on peut aussi utiliser, comme montré à la figure 5B, une préforme à paroi d'épaisseur constante y compris dans sa région de fond, l'épaisseur plus importante du récipient étant alors obtenue en menant l'étape de chauffage et celle, suivante, de moulage de façon appropriée.

A la suite de cette étape de chauffage du corps 7 de la préforme, on moule, en particulier par soufflage ou étirage-soufflage, le corps chaud 7 de la préforme pour constituer le corps 11 d'un récipient intermédiaire 12 (fig. 5C) qui est surdimensionné par rapport au récipient final à obtenir.

Dans le récipient intermédiaire 12, le corps 11 possède une hauteur supérieure d'environ 15 à 30 % à la hauteur du récipient définitif à obtenir et une dimension transversale supérieure d'environ 0 à 30 % à la dimension transversale du corps du récipient définitif, tandis que les parois de conformation du moule sont maintenues à une température comprise entre 10°C et 180°C, de préférence d'environ 60°C.

Au cours de cette première opération de moulage, le fond est bombé vers l'intérieur à la manière d'un fond champagne et présente une zone centrale 14 dépourvue de convexité tournée vers l'extérieur à l'exception de l'éventuel point d'injection (c'est-à-dire soit en forme de voûte continue, soit en forme de dôme comme représenté à la figure 5C, soit en forme de plateau) ; le fond 13 avec la zone centrale 14 possède la forme du fond du récipient définitif à obtenir et présente un diamètre égal ou légèrement supérieur (par exemple d'environ 0 à 4 %) à celui du fond du récipient définitif à obtenir, tandis que les parois correspondantes de conformation du moule pour cette partie de fond sont refroidies à une température sensiblement inférieure à celle des parois de conformation de la susdite partie intermédiaire du corps 11 ; cette température est ici comprise entre environ 2 et 20°C, de préférence d'environ 10°C. Le taux d'allongement global du matériau thermoplastique dans la région de la préforme destinée à constituer l'ensemble du fond est inférieur ou au plus égal à 1,8 et correspond à un développement du matériau avec un étirage limité ou sans étirage sensible ; dans la partie intermédiaire de la préforme située entre le goulot et la partie destinée à constituer le fond du récipient, le taux d'étirage longitudinal est plus élevé et égal ou inférieur à 3,2.

A la suite de ce premier moulage, on chauffe au moins le corps du récipient intermédiaire (le goulot pouvant éventuellement subir, lui aussi, un traitement thermique au cours de cette étape) en prévoyant un chauffage différencié: la partie intermédiaire du corps est chauffée à une température comprise entre environ 160 et 230°C, de préférence pendant une durée comprise entre 30 et 130 secondes, tandis que le fond est chauffé à une température d'environ 60 à 120°C, de préférence 75°C, de préférence pendant une durée comprise entre 10 et 130 secondes mais qui peut différer de celle du chauffage de la partie intermédiaire.

On obtient alors (voir fig. 5D) une ébauche 15 à corps 16 rétréci et déformé, avec un fond 17 qui a pu éventuellement lui aussi subir un faible rétrécissement (par exemple de l'ordre de 1 %, mais n'excédant pas 4 %) de telle sorte que le fond 17 possède désormais approximativement la forme et les dimensions du récipient définitif à obtenir (ordre de grandeur de variation possible du diamètre : 0 à 1 % et de la profondeur : 0 à 2 %).

On notera que l'ébauche 15 obtenue au cours de cette étape peut présenter une longueur sensiblement supérieure à celle du récipient final à obtenir, comme indiqué dans le document FR-93 15 920.

Ensuite de quoi on procède à une seconde étape de moulage, par soufflage ou étirage-soufflage, portant sur la partie intermédiaire du corps de l'ébauche 15, mais sans étirage sensible du fond 17, afin de constituer le récipient définitif 1 (fig. 5E). Au cours du moulage, on peut prévoir une compensation de pression dans le moule, sous le fond 17 de l'ébauche 15, pour compenser la pression de soufflage, afin d'éviter que la matière constitutive du fond soit soumise à un effort trop important et subisse un étirage. Cette compensation de pression peut notamment être obtenue comme enseigné par le document FR 93 15 920, en prévoyant un moule équipé d'un fond disposé de manière à n'exercer sensiblement aucune poussée axiale contre le fond de l'ébauche 15 tout en étant immédiatement et étroitement adjacent audit fond lorsque la pression de soufflage est appliquée dans l'ébauche. On peut ainsi avoir recours à un fond mobile comme enseigné dans le document précité.

Durant l'étape de moulage, la température des parois de conformation du moule est comprise entre 110 et 160°C, de préférence d'environ 140°C, pour la partie intermédiaire 16 du corps et entre 20 et 130°C, de préférence entre 90 et 120°C, pour le fond 17.

## Revendications

1. Procédé pour fabriquer, à partir d'une préforme en matériau thermoplastique, un récipient, tel que bouteille, flacon ou analogue, dont le matériau présente une orientation biaxiale et qui est apte à subir, sans déformations notables, des conditions d'utilisation relativement sévères, ledit récipient présentant un fond (2) qui est incurvé avec une convexité tournée vers l'intérieur (fond champagne) et qui possède une épaisseur sensiblement supérieure à celle de la paroi (3) du récipient, comprenant les étapes qui suivent :
a) on chauffe, à une température au moins égale à la température de ramollissement du matériau thermoplastique, au moins le corps amorphe (7) d'une préforme (9) ;
b) on moule le corps chaud de la préforme pour constituer le corps (11) d'un récipient intermédiaire (12)
. dont la hauteur est supérieure de 15 à 30 % à la hauteur du récipient définitif et dont la dimension transversale du corps est d'environ 0 à 30 % supérieure à la dimension transversale du corps du récipient définitif à obtenir, tandis que les parois correspondantes de conformation du moule sont maintenues à une température comprise entre environ 10 et 180 °C, de préférence d'environ 60°C,
et
. dont le fond (13) est bombé vers l'intérieur et présente une zone centrale (14) dépourvue de convexité tournée vers l'extérieur, ledit fond (13) ayant sensiblement la forme du fond du récipient définitif à obtenir et ayant un diamètre égal ou légèrement supérieur à celui du fond du récipient définitif à obtenir, tandis que les parois correspondantes de conformation du moule sont refroidies à une température sensiblement inférieure aux parois de conformation de la partie intermédiaire et comprise entre environ 2 et 20°C, de préférence d'environ 10 °C, le taux d'allongement du matériau thermoplastique dans la région de la préforme destinée à constituer la susdite zone centrale étant inférieur ou au plus égal à 1,8 et correspondant à un développement du matériau sans étirage sensible ou avec un étirage limité ;
c) on chauffe ensuite au moins le corps (11) du récipient intermédiaire, la paroi latérale du corps étant chauffée à une température comprise entre environ 160 et 230°C et le fond étant chauffé à une température d'environ 60 à 120°C,
ensuite de quoi on obtient une ébauche (15) à corps (16) rétréci dont le fond (17) présente approximativement la forme et les dimensions du fond du récipient définitif à obtenir ;
d) puis finalement on moule une nouvelle fois le corps de l'ébauche rétrécie (15) par soufflage de la paroi latérale du corps mais sans étirage sensible du fond.

2. Procédé selon la revendication 1, caractérisé en ce que l'ébauche à corps rétréci (15) de l'étape c) est sensiblement plus longue que le récipient final à obtenir.

3. Procédé selon la revendication 1 ou 2, caractérisé en ce que le diamètre du fond du récipient intermédiaire formé à l'étape b) est compris entre 0 et 15 % du diamètre du récipient définitif à obtenir.

4. Procédé selon l'une quelconque des revendications 1 à 3, caractérisé en ce qu'au cours de l'étape c), la paroi latérale du corps du récipient intermédiaire est chauffé pendant une durée comprise entre environ 30 et 130 s.

5. Procédé selon l'une quelconque des revendications 1 à 4, caractérisé en ce qu'au cours de l'étape c), le fond du récipient intermédiaire est chauffé pendant une durée comprise entre environ 10 et 130 s.

6. Procédé selon l'une quelconque des revendications 1 à 5, caractérisé en ce qu'au cours de l'étape d), la température du moule est comprise entre environ 110 et 160°C, de préférence d'environ 130°C, pour la partie intermédiaire du corps et entre environ 20 et 130°C, de préférence entre environ 90 et 120°C, pour le fond.

7. Procédé selon l'une quelconque des revendications 1 à 6, caractérisé en ce qu'on assure une compensation de pression sous le fond de l'ébauche à l'étape d), en prévoyant dans le moule un fond de moule disposé de manière à n'exercer sensiblement aucune poussée axiale contre le fond de l'ébauche à corps rétréci tout en étant immédiatement et étroitement adjacent audit fond de l'ébauche lorsque la pression de soufflage est appliquée dans l'ébauche.

8. Procédé selon les revendications 2 et 7 en combinaison, caractérisé en ce que le fond du moule est un fond mobile.

9. Procédé selon l'une quelconque des revendications 1 à 8, caractérisé en ce que la préforme (9) utilisée au cours de l'étape a) présente une épaisseur plus importante au moins dans sa partie inférieure (10) destinée à constituer, après traitement, le fond plus épais du récipient intermédiaire.

10. Procédé selon l'une quelconque des revendications 1 à 8, caractérisé en ce que la préforme (9) utilisée au cours de l'étape a) présente une épaisseur sensiblement uniforme et en ce que l'épaisseur plus importante du fond du récipient intermédiaire est obtenue au cours de l'étape de moulage b).

11. Procédé selon l'une quelconque des revendications 1 à 10, caractérisé en ce qu'on forme la partie inférieure de la paroi latérale adjacente au fond avec une épaisseur supérieure à celle du reste de la paroi latérale, la hauteur de ladite partie inférieure plus épaisse étant au plus égale à deux fois la hauteur du fond champagne.

12. Procédé selon l'une quelconque des revendications 1 à 11, caractérisé en ce que la zone centrale présente la forme approximative d'un plateau (4a) déporté axialement vers l'intérieur.

13. Procédé selon l'une quelconque des revendications 1 à 11, caractérisé en ce que la zone centrale est bombée en forme de dôme (4b) à convexité tournée vers l'intérieur.

14. Procédé selon l'une quelconque des revendications 1 à 13, caractérisé en ce que la zone centrale (4) est en saillie d'au moins 1 mm par rapport à la région environnante du fond (2).

15. Procédé selon l'une quelconque des revendications 1 à 14, caractérisé en ce que la zone centrale possède une épaisseur sensiblement égale à celle du reste du fond (2).

16. Procédé selon l'une quelconque des revendications 1 à 15, caractérisé en ce que la dimension transversale de la zone centrale (4) représente environ 10 à 40 %, de préférence environ 35 %, de la dimension transversale du fond (2).

17. Procédé selon l'une quelconque des revendications 1 à 11, caractérisé en ce que l'ensemble du fond présente une courbure continue.

18. Procédé selon l'une quelconque des revendications 1 à 17, caractérisé en ce que la partie inférieure de la paroi latérale (3) adjacente au fond (2) présente, elle aussi, une épaisseur supérieure à celle du reste de la paroi latérale, la hauteur de ladite partie inférieure plus épaisse (6) n'excédant pas deux fois la hauteur du fond champagne.

19. Procédé selon la revendication 18, caractérisé en ce que l'épaisseur accrue de ladite partie inférieure de la paroi latérale diminue de façon continue et régulière depuis le bas où elle est sensiblement égale à celle du fond vers le haut où elle devient sensiblement égale à l'épaisseur nominale de la paroi latérale.

20. Procédé selon l'une quelconque des revendications 1 à 19, caractérisé en ce que l'épaisseur accrue du fond (2) est égale à approximativement trois à huit fois l'épaisseur de la paroi latérale mince (3).

## Claims

1. Process for manufacturing, from a preform made of a thermoplastic, a container, such as a bottle, flask or the like, the material of which exhibits a biaxial orientation, which is capable of withstanding, without appreciable deformation, relatively harsh conditions of use, said container having an inwardly convex curved bottom (2) (champagne bottom) which has a thickness substantially greater than that of the wall (3) of the container,
comprising the following steps :
a) at least the amorphous body (7) of a preform (9) is heated to a temperature at least equal to the softening temperature of the thermoplastic;
b) the hot body of the preform is molded in order to form the body (11) of an intermediate container (12)
. the height of which is between 15 and 30% greater than the height of the final container and the transverse dimension of the body of which is approximately 0 to 30% greater than the transverse dimension of the body of the final container to be obtained, while the corresponding shaping walls of the mold are maintained at a temperature of between approximately 10 and 180°C, preferably approximately 60°C,
and
. the bottom (13) of which is inwardly rounded and has a central area (14) devoid of outwardly facing convexity, said bottom (13) having substantially the shape of the bottom of the final container to be obtained and having a diameter equal to or slightly greater than that of the bottom of the final container to be obtained, while the corresponding shaping walls of the mold are cooled to a temperature which is substantially less than the walls for shaping the intermediate part and is between approximately 2 and 20°C, preferably approximately 10°C, the degree of elongation of the thermoplastic in the region of the preform intended to form the abovementioned central area being less than or at most equal to 1,8 and corresponding to development of the material with no appreciable drawing or with limited drawing;
c) next, at least the body (11) of the intermediate container is heated, the side wall of the body being heated to a temperature of between approximately 160 and 230°C and the bottom being heated to a temperature of approximately 60 to 120°C,
after which a preform (15) having a necked body (16) is obtained, the bottom (17) of which has approximately the shape and size of the bottom of the final container to be obtained;
d) and then, finally, the body of the necked preform (15) is molded once again by blowing the side wall of the body, but with no appreciable drawing of the bottom.

2. Process according to claim 1, characterized in that the necked-body preform (15) of step c) is substantially longer than the final container to be obtained.

3. Process according to claim 1 or 2, characterized in that the diameter of the bottom of the intermediate container formed at step b) is between 0 and 15% of the diameter of the final container to be obtained.

4. Process according to any one of claims 1 to 3, characterized in that the side wall of the body of the intermediate container is heated during step c) for a period lasting between approximately 30 and 130 s.

5. Process according to any one of claims 1 to 4, characterized in that the bottom of the intermediate container is heated during step c) for a period lasting between approximately 10 and 130 s.

6. Process according to any one of claims 1 to 5, characterized in that the temperature of the mold during step d) is between approximately 110 and 160°C, preferably approximately 130°C, for the intermediate part of the body and between approximately 20 and 130°C, preferably between approximately 90 and 120°C, for the bottom.

7. Process according to any one of claims 1 to 6, characterized in that pressure compensation under the bottom of the preform is ensured in step d) by providing, in the mold, a mold bottom arranged so as to exert substantially no axial force against the bottom of the necked-body preform while being immediately and closely adjacent to said bottom of the preform when the blowing pressure is applied in the preform.

8. Process according to claims 2 and 7 in combination, characterized in that the bottom of the mold is a moveable bottom.

9. Process according to any one of claims 1 to 8, characterized in that the preform (9) used during step a) has a greater thickness at least in its lower part (10) intended to form, after treatment, the thicker bottom of the intermediate container.

10. Process according to any one of claims 1 to 8, characterized in that the preform (9) used during step a) has a substantially uniform thickness and in that the greater thickness of the bottom of the intermediate container is obtained during molding step b).

11. Process according to any one of claims 1 to 10, characterized in that the lower part of the side wall adjacent to the bottom is formed with a greater thickness than that of the rest of the side wall, the height of said thicker lower part being at most equal to twice the height of the champagne bottom.

12. Process according to any one of claims 1 to 11, characterized in that the central area has approximately the shape of a plateau (4a) shifted axially inward.

13. Process according to any one of claims 1 to 11, characterized in that the central area is rounded in the form of an inwardly convex dome (4b).

14. Process according to any one of claims 1 to 13, characterized in that the central area (4) projects from the surrounding region of the bottom (2) by at least 1 mm.

15. Process according to any one of claims 1 to 14, characterized in that the central area has a thickness substantially equal to that of the rest of the bottom (2).

16. Process according to any one of claims 1 to 15, characterized in that the transverse dimension of the central area (4) represents approximately 10 to 40%, preferably approximately 35%, of the transverse dimension of the bottom (2).

17. Process according to any one of claims 1 to 11, characterized in that the entire bottom exhibits a continuous curvature.

18. Process according to any one of claims 1 to 17, characterized in that the lower part of the side wall (3) adjacent to the bottom (2) also has a greater thickness than that of the rest of the side wall, the height of said thicker lower part (6) not exceeding twice the height of the champagne bottom.

19. Process according to claim 18, characterized in that the increased thickness of said lower part of the side wall decreases continuously and uniformly from the base, where it is substantially equal to that of the bottom, toward the top, where it becomes substantially equal to the nominal thickness of the side wall.

20. Process according to any one of claims 1 to 19, characterized in that the increased thickness of the bottom (2) is equal to approximately three to eight times the thickness of the thin side wall (3).

## Patentansprüche

1. Verfahren zum Herstellen eines Behälters wie eine Flasche, ein Flakon oder dgl., ausgehend aus einer Vorform aus thermoplastischem Material, dessen Material eine biaxiale Orientierung aufweist und das geeignet ist, ohne wesentliche Verformungen relativ harten Einsatzbedingungen ausgesetzt zu werden, wobei der Behälter einen Boden (2) aufweist, der mit einer nach innen gerichteten Wölbung gebogen ist (Champagnerboden) und der eine Dicke besitzt, die wesentlich größer als die der Wand (3) des Behälters ist, mit den folgenden Schritten:
a) es wird wenigstens der amorphe Körper (7) einer Vorform (9) auf eine Temperatur erhitzt, die wenigstens gleich der Erweichungstemperatur des thermoplastischen Materials ist;
b) es wird der heiße Körper der Vorform geformt, um den Körper (11) eines Zwischenbehälters (12) zu bilden, dessen Höhe um 15 bis 30 % höher als die Höhe des Endbehälters ist und dessen Querabmessung des Körpers etwa 0 bis 30 % größer als die Querabmessung des Körpers des zu erhaltenen Endbehälters ist, während die entsprechenden Formgebungswände der Form auf einer Temperatur gehalten werden, die zwischen etwa 10 und 180°C, vorzugsweise bei etwa 60°C, liegt,
und
dessen Boden (13) nach ihnen gewölbt ist und eine nach außen biegungsfreie zentrale Zone (14) aufweist, wobei der Boden (13) im wesentlichen die Form des Bodens des zu erhaltenen Endbehälters hat und einen Durchmesser gleich oder ein wenig größer als dem des Bodens des zu erhaltenen Endbehälters hat, während die entsprechenden Formgebungswände der Form an den Mittelabschnitten der Formgebungswände auf eine Temperatur abgekühlt werden, die wesentlich tiefer ist und zwischen etwa 2 und 20° C, vorzugsweise bei etwa 10°C, liegt, wobei der Streckgrad des thermoplastischen Materials in dem Bereich der Vorform, der zur Bildung dieser zentralen Zone bestimmt ist, unterhalb oder höchstens gleich 1,8 beträgt und einer Entwicklung des Materials ohne wesentliche Streckung oder mit einer begrenzten Streckung entspricht;
c) es wird dann wenigstens der Körper (11) des Zwischenbehälters erwärmt, wobei die Seitenwand des Körpers auf eine Temperatur erwärmt wird, die zwischen etwa 160 und 230°C liegt, und der Boden auf eine Temperatur von etwa 60 bis 120°C erwärmt wird,
daraufhin wird ein Rohling (15) mit einem geschrumpften Körper (16) erhalten, dessen Boden (17) in etwa die Form und die Abmessungen des Bodens des zu erhaltenen Endbehälters aufweist;
d) schließlich wird der Körper des geschrumpften Rohlings (15) durch Blasformung der Seitenwand des Körpers aber ohne wesentliche Streckung des Bodens geformt.

2. Verfahren nach Anspruch 1, dadurch gekennzeichnet, daß der Rohling mit geschrumpften Körper (15) des Schrittes c) wesentlich länger als der zu erhaltene Endbehälter ist.

3. Verfahren nach Anspruch 1 oder 2, dadurch gekennzeichnet, daß der Durchmesser des Bodens des Zwischenbehälters, der im Schritt b) gebildet wird, zwischen etwa 0 bis 15 % des Durchmessers des zu erhaltenen Endbehälters beträgt.

4. Verfahren nach einem der Ansprüche 1 bis 3, dadurch gekennzeichnet, daß im Verlauf des Scbrittes c) die Seitenwand des Körpers des Zwischenbehälters über eine Dauer von zwischen etwa 30 bis 130 Sekunden erwärmt wird.

5. Verfahren nach einem der Ansprüche 1 bis 4, dadurch gekennzeichnet, daß im Verlauf des Schrittes c) der Boden des Zwischenbehälters über eine Dauer zwischen etwa 10 bis 130 Sekunden erwärmt wird.

6. Verfahren nach einem der Ansprüche 1 bis 5, dadurch gekennzeichnet, daß im Verlauf des Schrittes d) die Temperatur der Form für den Mittelbereich des Körpers zwischen etwa 110 und 160°C, vorzugsweise etwa 130°C, beträgt und für den Boden zwischen etwa 20 und 130°C, vorzugsweise zwischen etwa 90 und 120°C.

7. Verfahren nach einem der Ansprüche 1 bis 6, dadurch gekennzeichnet, daß über dem Boden des Rohlings im Schritt d) ein Druckausgleich sichergestellt wird, indem in der Form ein Boden vorgesehen wird, der derart angeordnet ist, daß im wesentlichen kein axialer Stoß gegen den Boden des Rohlings mit geschrumpften Körper ausgeübt wird, sowohl unmittelbar als auch direkt neben dem Boden des Rohlings, wenn der Blasdruck im Rohling angelegt wird.

8. Verfahren nach den Ansprüchen 2 und 7 in Kombination, dadurch gekennzeichnet, daß der Boden der Form ein beweglicher Boden ist.

9. Verfahren nach einem der Ansprüche 1 und 8, dadurch gekennzeichnet, daß die im Verlauf des Schrittes a) verwendete Vorform (9) ein wenigstens in ihrem unteren Bereich (10), der nach der Behandlung zur Bildung des dickeren Bodens des Zwischenbehälters bestimmt ist, eine erheblich größere Dicke aufweist.

10. Verfahren nach einem der Ansprüche 1 bis 8, dadurch gekennzeichnet, daß die im Verlauf des Schrittes a) verwendete Vorform (9) eine im wesentliche gleichförmige Dicke aufweist und daß die erheblich größere Dicke des Bodens des Zwischenbehälters im Verlauf des Formungsschrittes b) erhalten wird.

11. Verfahren nach einem der Ansprüche 1 bis 10, dadurch gekennzeichnet, daß der untere Bereich der an den Boden angrenzenden Seitenwand mit einer größeren Dicke als der des Restes der Seitenwand gebildet wird, wobei die Höhe des unteren, dickeren Bereichs höchstens gleich dem zweifachen der Höhe des Champagnerbodens ist.

12. Verfahren nach einem der Ansprüche 1 bis 11, dadurch gekennzeichnet, daß die zentrale Zone die ungefähre Form eines Plateaus (4a) aufweist, das axial nach ihnen verschoben ist.

13. Verfahren nach einem der Ansprüche 1 bis 11, dadurch gekennzeichnet, daß die zentrale Zone in Form eines Domes (4b) mit einer nach innen gerichteten Wölbung gebogen wird.

14. Verfahren nach einem der Ansprüche 1 bis 13, dadurch gekennzeichnet, daß die zentrale Zone (4) um wenigsten 1 mm gegenüber dem Umgebungsbereich des Bodens (2) vorsteht.

15. Verfahren nach einem der Ansprüche 1 bis 14, dadurch gekennzeichnet, daß die zentrale Zone eine Dicke besitzt, die im wesentlichen gleich der des Restes des Bodens (2) ist.

16. Verfahren nach einem der Ansprüche 1 bis 15, dadurch gekennzeichnet, daß die Querabmessung der zentralen Zone (4) in etwa 10 bis 40 %, vorzugsweise etwa 35 %, der Querabmessung des Bodens (2) beträgt.

17. Verfahren nach einem der Ansprüche 1 bis 11, dadurch gekennzeichnet, daß die Gesamtheit des Bodens eine kontinuierliche Kurvenlinie aufweist.

18. Verfahren nach einem der Ansprüche 1 bis 17, dadurch gekennzeichnet, daß der an dem Boden (2) angrenzende untere Bereich der Seitenwand (3) selbst auch eine größere Dicke als der Rest der Seitenwand aufweist, wobei die Höhe des unteren dickeren Bereichs (6) das Zweifache der Höhe des Champagnerbodens nicht übersteigt.

19. Verfahren nach Anspruch 18, dadurch gekennzeichnet, daß sich die größere Dicke des unteren Bereichs der Seitenwand in kontinuierlicher und gleichmäßiger Weise von unten aus, wo diese im wesentlichen gleich derjenigen des Bodens ist, nach oben hin, wo diese im wesentlichen gleich der nominalen Dicke der Seitenwand sein soll, verringert.

20. Verfahren nach einem der Ansprüche 1 bis 19, dadurch gekennzeichnet, daß die größere Dicke des Bodens (2) gleich etwa dem Drei- bis Achtfachen der Dicke der dünnen Seitenwand (3) ist.
